# DEMANDE DE BREVET EUROPEEN

(11) **EP 0 862 852 A1**
(43) Date de publication de la demande: **09.09.1998**
(21) Numéro de dépôt: 98480013.6
(22) Date de dépôt: 02.03.1998
(51) Int. Cl.: A01G 27/02

(54) **Dispositif d'irrigation de jardinières**

(30) Priorité: 03.03.1997 FR 9702703
(71) Demandeur: Friedel, Gerhard, 06130 Grasse (FR)
(72) Inventeur: Friedel, Gerhard, 06130 Grasse (FR)

(57) **Abrégé**

L'invention concerne un dispositif permettant d'irriguer des plantes en jardinières en supprimant les risques de ruissellement, débordement et écoulement.

Il est constitué d'un boîtier servant de réservoir à eau au bas duquel est branché un tuyau en caoutchouc souple et poreux qui diffuse l'eau sans pression dans la terre au niveau des racines.

Le dispositif selon l'invention est particulièrement destiné à l'irrigation de jardinières suspendues aux fenêtres ou balcons.

## Description

La présente invention concerne un dispositif pour irriguer les jardinières et bacs à plantes ornementales.

L'irrigation des jardinières est traditionnellement faite par aspersion au moyen d'un arrosoire. Cette méthode présente les inconvénients suivants:
- une partie de l'eau ruisselle par dessus les plantes et se répand hors des jardinières.
- le dosage de la quantité d'eau réellement nécessaire aux besoins de la plante est pratiquement impossible. Le faible volume de terre contenu dans la jardinière est rapidement saturé d'eau et celle-ci s'écoule par les orifices d'évacuation situés sous la jardinière.
- De nombreuses plantes à fleurs habituellement utilisées en jardinières supportent mal l'aspersion et deviennent vite inesthétiques.

Il existe des modèles de jardinières à double fond, le bas servant de réservoir à eau. Leur fonction phyto-sanitaire est défectueuse : le contact direct de la terre et des racines avec l'eau stagnant au fond du bac produit un microclimat avec risque de pourriture et développement d'un milieu favorable aux parasites.

En outre ces systèmes à réservoir sont coûteux.

Le dispositif selon l'invention permet de remédier aux inconvénients cités. Il se compose d'un boîtier servant de réservoir à eau qu'on place sur un côté de la jardinière au moment du garnissage. La paroi supérieure du boîtier se présente sous forme de couvercle. L'utilisateur procède au remplissage du réservoir par cette ouverture. Le boîtier a une capacité d'environ 1,25 litre. Il comporte dans le bas un embout sur lequel vient s'emmancher un tuyau en caoutchouc souple et poreux de la longueur de la jardinière, fermé à son extrémité par un bouchon en matière plastique. L'eau s'écoule sans pression du boîtier dans le tuyau qui est poreux sur toute sa longueur. L'eau est exsudée dans la terre au niveau des racines des plantes. En l'absence de pression, la quantité diffusée correspond exactement au taux de capillarité de la terre, sans jamais dépasser le seuil de saturation.

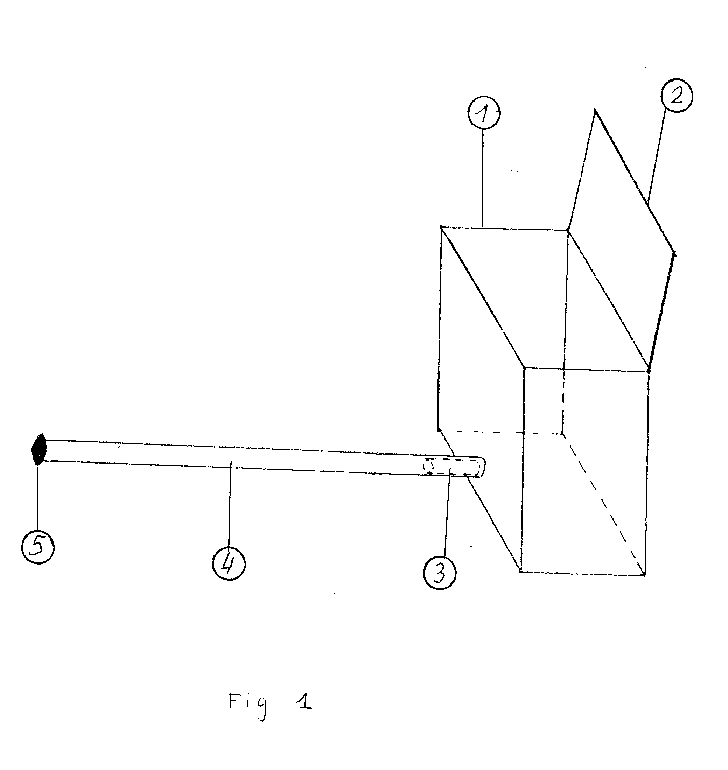

Le dessin annexé illustre l'invention :
La figure représente en coupe le dispositif de l'invention. Le dispositif comporte un boîtier (1) dont la paroi supérieure est un couvercle (2) et permet le remplissage en eau. Au bas de la face antérieure du boîtier se trouve un embout (3) sur lequel vient s'emmancher le tuyau en caoutchouc souple et poreux (4). Le tuyau est fermé par un bouchon (5).

A titre d'exemple non limitatif, le boîtier a des dimensions telles qu'il peut prendre place dans toutes les jardinières habituellement dans le commerce.

La longueur du tuyau ne doit pas excéder 1,20 mètre. Au delà de cette longueur, la perte de charge de l'eau est telle, qu'une humidification suffisante de la terre n'est plus possible.

Le dispositif selon l'invention est particulièrement destiné à l'irrigation de jardinières suspendues aux fenêtres et balcons.

## Revendications

1. Dispositif pour irriguer les jardinières caractérisé en ce qu'il comporte un boîtier (1) servant de réservoir à eau placé latéralement dans la jardinière.

2. dispositif selon la revendication 1 caractérisé en ce que la paroi supérieure du boîtier se présente sous forme d'un couvercle (2) par lequel s'effectue le remplissage du réservoir en eau.

3. dispositif selon la revendication 1 ou la revendication 2 caractérisé en ce qu'un tuyau en caoutchouc souple et poreux (4) est branché sur un embout (3) situé à la base du boîtier.

4. dispositif selon l'une quelconque des revendications précédentes caractérisé en ce que l'extrémité du tuyau est fermée par un bouchon (5).
